Europäisches Patentamt

European Patent Office

Office européen des brevets

(19)

(11) Numéro de publication : **0 443 944 A1**

(12) # DEMANDE DE BREVET EUROPEEN

(21) Numéro de dépôt : **91400447.8**

(51) Int. Cl.⁵ : **G06K 11/16**

(22) Date de dépôt : **19.02.91**

(30) Priorité : **19.02.90 FR 9001969**

(43) Date de publication de la demande :
**28.08.91 Bulletin 91/35**

(84) Etats contractants désignés :
**AT BE CH DE DK ES GB GR IT LI LU NL SE**

(71) Demandeur : **MORS**
**4 avenue Vélasquez**
**F-75008 Paris (FR)**

(72) Inventeur : **Allevena, Jean-Pierre Villa "Les**
**Didians"**
**Chemin de Grivoton-Pont des 3 Sautets**
**13100 Aix en Provence (FR)**

(74) Mandataire : **Beauchamps, Georges et al**
**Cabinet Z.Weinstein 20, avenue de Friedland**
**F-75008 Paris (FR)**

(54) **Dispositif formant écran tactile du type capacitif.**

(57) La présente invention concerne un dispositif formant écran tactile du type capacitif.

Le dispositif est caractérisé en ce qu'il comprend des premier et second groupes d'électrodes électriquement conductrices respectivement (2) et (5) séparés par un diélectrique (1) pour définir une pluralité de paires de condensateurs, les électrodes (5) formant touches de façon que l'apposition sur l'une de celles-ci d'un corps formant référentiel de masse modifie la capacité du condensateur correspondant.

La présente invention trouve application notamment dans un équipement de visualisation informatique permettant un dialogue conversationnel.

EP 0 443 944 A1

Jouve, 18, rue Saint-Denis, 75001 PARIS

Fig. 1

# DISPOSITIF FORMANT ECRAN TACTILE DU TYPE CAPACITIF

La présente invention concerne un dispositif formant écran tactile du type capacitif destiné notamment à recouvrir un écran de visualisation d'une unité de visualisation telle que par exemple un tube à rayons cathodiques.

On connaît de tels dispositifs comprenant un substrat diélectrique transparent, tel que du verre, en forme de plaque, dont la face avant opposée à l'écran de visualisation comporte un certain nombre d'électrodes électriquement conductrices et isolées les unes des autres de façon à former une matrice de touches. Ces électrodes formant touches sont reliées à un circuit électronique, logé dans l'unité de visualisation, par l'intermédiaire de fils conducteurs déposés sur la face avant du substrat et se terminant par deux rangées de points de contact également espacés respectivement aux bords inférieur et supérieur du substrat. Les fils conducteurs de liaison des électrodes internes de la matrice au circuit électronique sont disposés dans les espaces entre électrodes adjacentes. Les électrodes et les fils sont généralement réalisées en oxyde d'indium et d'étain. Lorsqu'un opérateur appose un doigt sur l'une des électrodes formant touches, il se produit un variation de capacité influençant la fréquence naturelle d'un oscillateur associé à cette touche faisant partie du circuit électronique.

Ces dispositifs connus présentent les inconvénients suivants:

– un usage intensif de l'écran tactile produit à la longue une usure des électrodes formant touches et des pistes conductrices pouvant aller pour ces dernières jusqu'à une interruption de leur continuité. Cette usure provoque des défaillances des électrodes formant touches et des pistes concernées. Cette défaillance se produit également suite à des rayures de la face avant de l'écran tactile qui peuvent également interrompre la continuité des pistes ;

– une transmission au circuit électronique de données erronées se produit souvent par toucher direct des pistes de liaison au lieu des électrodes formant touches notamment dans le cas où ces électrodes sont de relativement faibles dimensions ;

– une destruction de tout ou partie du circuit électronique associé aux électrodes formant touches est à craindre par décharges électrostatiques sur l'écran.

Certains dispositifs connus prévoient le dépôt d'une couche isolante de protection en SiO2 ou analogue sur la face avant de l'écran tactile mais cette couche est d'une épaisseur limitée par la technique actuelle et s'use relativement vite de sorte que les inconvénients mentionnés ci-dessus se retrouvent.

La présente invention propose un dispositif formant écran tactile du type capacitif permettant d'éliminer les inconvénients ci-dessus.

Pour cela, le dispositif conforme à l'invention est caractérisé en ce qu'il comprend un premier groupe d'électrodes électriquement conductrices transparentes et isolées les unes des autres, non exposées à l'extérieur et devant être connectées à un circuit électronique de détection de variation de capacité et un second groupe d'électrodes libres électriquement conductrices transparentes isolées les unes des autres pour former des touches frontales et séparé du premier groupe par un diélectrique, les électrodes du second groupe étant superposées respectivement aux électrodes du premier groupe en se faisant face de façon à former des paires de condensateurs, dont la capacité de chacun varie lorsqu'un corps formant référentiel de masse, tel qu'un doigt d'un opérateur, est apposé sur une touche frontale.

Selon un mode de réalisation, les électrodes du premier groupe sont réalisées sur la face arrière d'un substrat en forme de plaque en un matériau diélectrique transparent, tel que du verre, et les électrodes formant touches du second groupe sont réalisées sur la face avant du substrat.

Selon un autre mode de réalisation, les électrodes du premier groupe sont réalisées sur la face avant d'un premier substrat en forme de plaque en un matériau diélectrique transparent, tel que du verre, et les électrodes formant touches du second groupe sont réalisées sur la face avant d'un second substrat en forme de plaque en un matériau diélectrique transparent fixé sur la face avant du premier substrat, par exemple par collage.

Selon une caractéristique de l'invention, les premier et second groupes d'électrodes forment respectivement deux matrices à colonnes et rangées et les électrodes du premier groupe sont reliées par de très fines pistes conductrices réalisées soit sur la face arrière du substrat précité, soit sur la face avant du premier substrat précité à des points de contact électriques disposés en deux rangées le long respectivement des bords supérieur et inférieur du substrat.

Selon encore une autre caractéristique de l'invention une très mince couche électriquement conductrice assurant une protection électrostatique est déposée sur la face avant soit du substrat précité en entourant de façon isolée la matrice d'électrodes libres précitée, cette couche étant mise à la masse.

La distance séparant les électrodes formant touches des électrodes du premier groupe peut varier d'environ 1 à 10 mm.

De préférence, les électrodes du premier groupe et la couche conductrice précitées sont réalisées en oxyde d'indium et d'étain.

De plus, les électrodes formant touches sont réalisées en oxyde d'indium et d'étain ou en oxyde d'étain et d'antimoine.

L'invention sera mieux comprise, et d'autres bus, caractéristiques, détails et avantages de celle-ci apparaîtront plus clairement au cours de la description explicative qui va suivre faite en référence aux dessins schématiques annexés donnés uniquement à titre d'exemple illustrant deux modes de réalisation de l'invention, et dans lesquels.

La figure 1 représente en perspective une partie de l'écran tactile conforme à l'invention suivant un premier mode de réalisation.

La figure 2 est une vue en coupe suivant la ligne II-II de la figure 2.

La figure 3 est une vue de dessous suivant la flèche III de la figure 1.

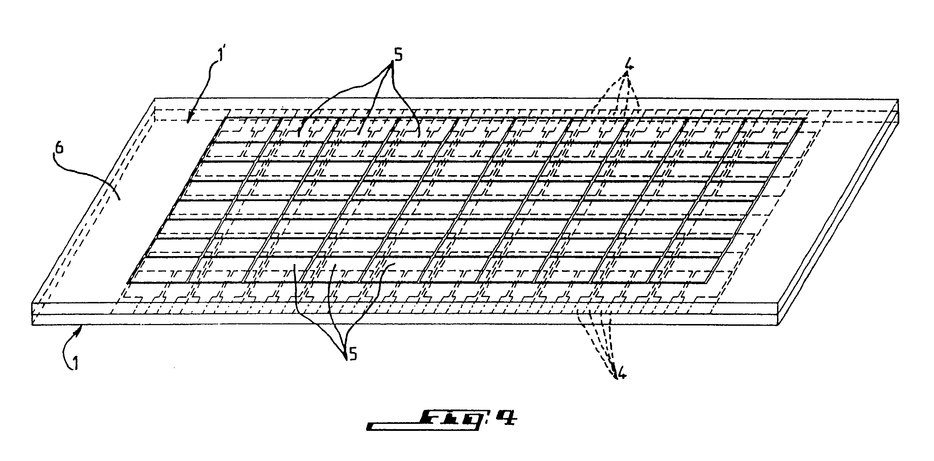

La figure 4 est une vue en perspective d'un écran tactile suivant le second mode de réalisation de l'invention.

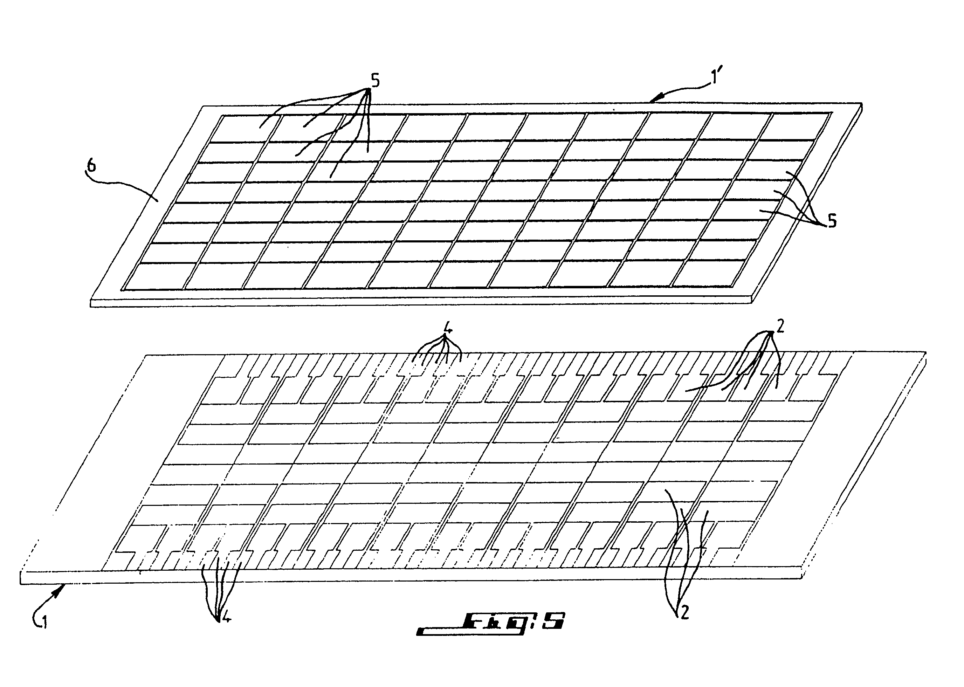

La figure 5 représente les deux substrats séparés destinés à former l'écran de la figure 4.

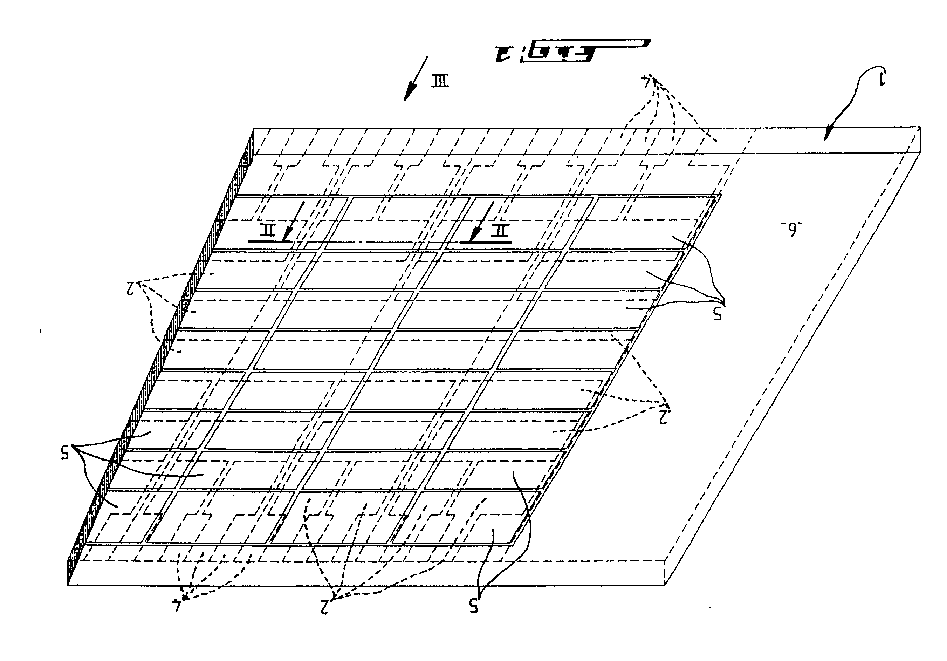

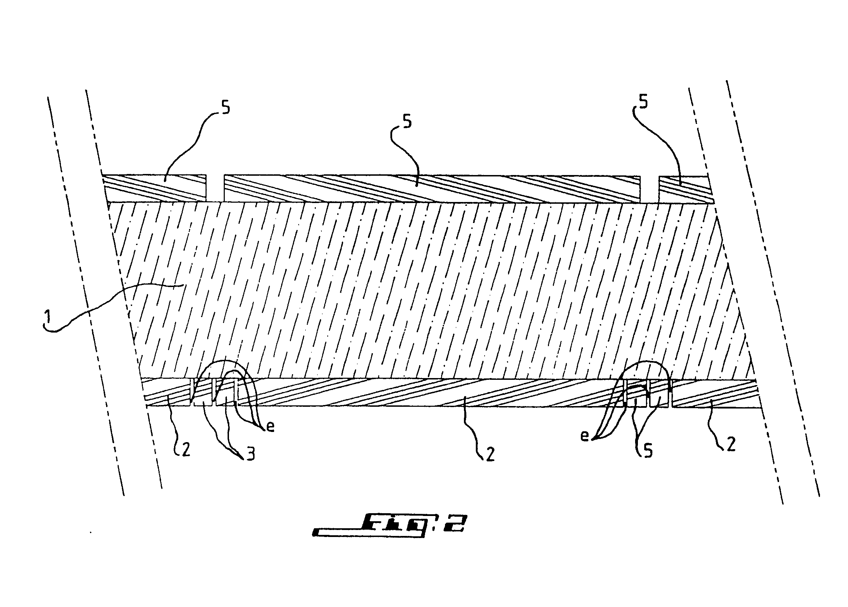

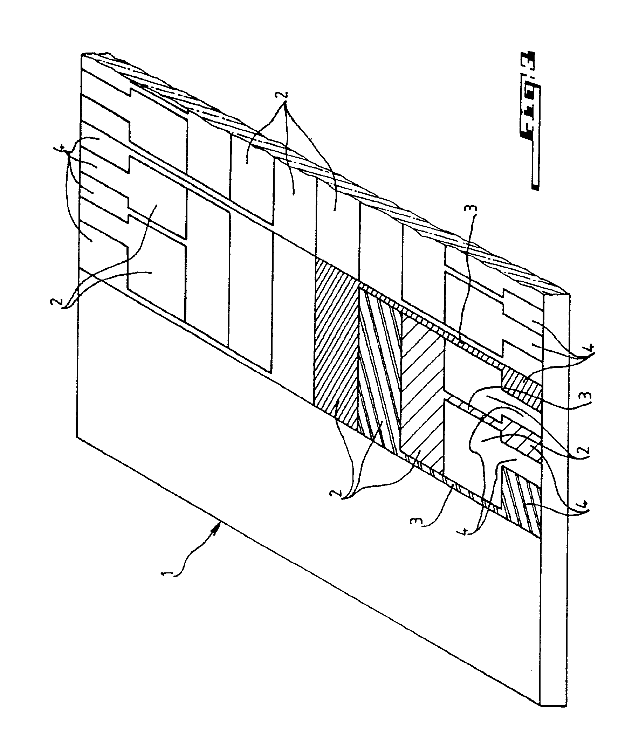

En se reportant aux figures 1 à 3 relatives au premier mode de réalisation de l'invention, le dispositif formant écran tactile du type capacitif comprend un substrat 1 en forme de plaque rectangulaire, réalisé en un matériau diélectrique transparent, tel que du verre ou une matière plastique appropriée. Des électrodes ou armatures électriquement conductrices transparentes 2, de préférence en oxyde d'indium et d'étain, sont réalisées sur la face arrière du substrat 1 en étant isolées électriquement les unes des autres. Les électrodes 2, dans le cas présent rectangulaires, forment une matrice en rangées et colonnes et sont reliées par l'intermédiaire de très fines pistes conductrices invisibles, également en oxyde d'indium et d'étain, à un circuit électronique de traitement logé dans une unité de visualisation, par exemple à tube à rayons cathodiques, sur l'écran de laquelle est fixé le substrat 1 de façon appropriée, avec les électrodes 2 en regard de l'écran de visualisation de l'unité de visualisation. La figure 3 représente plus précisément trois pistes conductrices 3 reliées respectivement à trois électrodes 2 qui sont identifiées par des hachures différentes. Les traits forts de cette figure 3 représentent en fait les espaces d'isolement entre électrodes 2, les espaces étant identifiés en figure 2 par la référence e. Les pistes conductrices 3, destinées ainsi a relier électriquement les électrodes internes 2 non adjacentes aux bords supérieur et inférieur du substrat 1, se terminent par des points de contact 4 en forme de bande solidaires de la face arrière du substrat 1 et disposés en deux rangées le long respectivement des bords supérieur et inférieur du substrat 1. Les électrodes 2 disposées en rangées à proximité des bords supérieur et inférieur du substrat 1 sont en fait constituées de deux électrodes d'une longueur approximativement la moitié des autres électrodes et sont reliées directement respectivement à deux points de contact 4 de forme identique à celle des aux autres points de contact, ces deux points de contact étant reliés électriquement entre-eux par un fil électrique non représenté. Bien entendu, la configuration des électrodes 2 et des pistes conductrices 3 telle qu'elle ressort de la figure 3 n'est donnée qu'à titre d'exemple, d'autres configurations différentes étant possibles. La connexion électrique entre les points de contact 4 et le circuit électronique de traitement s'effectue par exemple par une barrette de connexion à plots venant élastiquement en contact respectivement sur les points de contact 4 de chaque rangée, lesquels plots sont reliés par des fils conducteurs au circuit électronique.

L'obtention des différentes électrodes 2 s'effectue de façon classique en déposant sur la face arrière du substrat 1 une très fine couche en oxyde d'indium et d'étain et découpant cette couche par un faisceau laser en différentes zones de façon à former la matrice d'électrodes. La formation des pistes conductrices 3 est également obtenue par découpage au faisceau laser.

La face avant du substrat 1 comporte des électrodes ou armatures identiques 5 en un matériau conducteur transparent formant une matrice à rangées et colonnes et superposées respectivement aux électrodes 2 en se faisant face de façon à former des paires de condensateurs, dont la capacité de chacun varie lorsqu'un corps formant référentiel de masse, tel qu'un doigt d'un opérateur, est apposé sur une électrode 5 formant touche frontale. Les électrodes 5 sont réalisées de la même manière que les électrodes 2, c'est-à-dire en déposant sur la face avant du substrat 1 une très fine couche en un matériau conducteur et découpant au faisceau laser cette couche pour former les électrodes 5 qui sont ainsi électriquement isolées les unes des autres. Les électrodes 5 sont libres ou "en l'air", c'est-à-dire qu'elles ne sont pas du tout reliées au circuit électronique de traitement. La matière constituant les électrodes 5 peut être de l'oxyde d'indium et d'étain ou de l'oxyde d'étain et d'antimoine, mécaniquement plus résistant. De préférence, les dimensions des électrodes 5 sont identiques à celles des électrodes 2.

A titre d'exemple, l'épaisseur du substrat diélectrique peut être comprise entre environ 1 mm et 10 mm.

Le fonctionnement du dispositif formant écran tactile résulte déjà de la description qui en a été faite ci-dessus et va être maintenant expliqué.

Le circuit électronique de traitement permettant de détecter une variation de capacité "voit" à chaque paire de condensateur une valeur de capacité pratiquement nulle tant qu'aucune des électrodes formant touches 5 n'est activée.

Lorsqu'un opérateur appose un doigt sur une touche 5, le circuit électronique voit un condensateur formé par l'électrode 5 activée et l'électrode 2 en vis à vis en série avec la capacité du corps humain. Puisque la capacité du corps humain est trés grande par rapport à la valeur de capacité de chaque condensateur formé par deux électrodes 2 et 5, le circuit électronique a approximativement une capacité dont la valeur est celle du condensateur formé par les électrodes 2 et 5, la valeur de capacité du corps humain étant négligeable dans le calcul de la valeur de la capacité totale. Le dispositif électronique de traitement adapté pour détecter cette augmentation de capacité peut être par exemple celui décrit dans le brevet US N° 3 696 409 de façon que les électrodes 2 soient reliées respectivement à des oscillateurs, dont la fréquence naturelle de chacun est abaissée lorsque la touche 5 du condensateur associé à l'oscillateur est activée. En scrutant à l'aide du dispositif électronique connu les différentes paires de condensateurs et détectant celui ayant modifier la fréquence naturelle d'un oscillateur qui lui est associé, le dialogue conversationnel entre l'opérateur et l'équipement électronique est poursuivi suivant un programme déterminé.

Le dispositif formant écran tactile permet de détecter trés nettement une variation de fréquence du fait d'une variation très nette de capacité du condensateur dont on a touché l'électrode correspondante 5, ce qui n'était pas du tout le cas pour les écrans tactiles antérieurement connus car la position d'un doigt d'un opérateur sur une touche résultait en la formation d'un mauvais condensateur, dont la valeur dépendait de la pression plus ou moins forte d'apposition de ce doigt. Au contraire, selon l'invention, indépendamment de la pression du doigt sur chaque touche 5, une même variation significative de capacité est obtenue. En d'autres termes, la détection de variation de capacité est indépendante de la qualité du toucher. De plus, puisque les pistes conductrices et les électrodes 2 sont formées sur la face arrière du substrat 1, et donc ne sont pas exposées extérieurement, tout contact direct avec celles-ci est empêché et, en conséquence, la transmission de données éronnées n'est plus possible. Par ailleurs, l'écran devient insensible aux rayures du fait que les électrodes actives 2 soient non exposées et si, dans le pire des cas une rayure serait telle qu'elle partagerait en deux parties égales une touche frontale 5, réduisant d'environ 50% la valeur de couplage capacitif, le circuit électronique pourrait être conçu de façon à tenir compte de la situation où l'opérateur appose son doigt sur l'une des deux moitiés de touche 5. Bien entendu, si le doigt est apposé sur la rayure partageant en deux une touche 5, l'accouplement capacitif resterait normal. Il est également à noter qu'aucune usure des fines pistes conductrices 3 ou interruption de celles-ci n'est possible puisque situées sur la face arrière du substrat 1 et la réalisation des touches 5 notamment en oxyde d'indium et d'antimoine leur procure une meilleure résistance à l'usure. La protection contre les décharges électrostatiques est naturellement élevée puisque la face frontale de l'écran est isolée des circuits actifs par le substrat en verre 1, seul le couplage capacitif pouvant transmettre l'énergie de décharge, mais qui est trés limitée. On peut prévoir éventuellement une protection complémentaire contre les décharges électrostatiques en déposant une couche en oxyde d'indium et d'étain 6 sur la face avant du substrat 1 et entourant de façon électriquement isolée le motif de touches 5, la couche 6 étant mise à la masse.

Le second mode de réalisation du dispositif conforme à l'invention diffère uniquement du premier mode de réalisation par le fait que les électrodes 2 et 5 sont réalisées respectivement sur deux substrats diélectriques transparents identiques en forme de plaque, par exemple en verre, fixés l'un sur l'autre par exemple par collage. Plus précisément, les électrodes 2 sont formées sur la face avant du substrat 1 selon une configuration identique à celle du premier mode de réalisation et les électrodes formant touches 5 sont formées sur la face avant ou face frontale du substrat 1' suivant une configuration identique à celle des électrodes 5 du premier mode de réalisation. Le substrat 1' est ensuite assemblé par collage sur le substrat 1 de façon à obtenir un ensemble unitaire formant écran tactile. Mises à part ces différences, le dispositif de ce second mode de réalisation fonctionne et procure les mêmes avantages que celui décrit aux figures 1 à 3 et a de plus une meilleure protection contre les décharges électrostatiques du fait de l'épaisseur accrue par la superposition des substrats 1 et 1'.

Pour parfaire la protection des touches 5, il est possible de déposer une couche en SiO2 sur la face avant de l'écran tactile. De plus, une protection contre des interférences de hautes fréquences peut être réalisée en prévoyant pour le second mode de réalisation une couche en oxyde d'indium et d'étain déposée sur toute la surface de la face arrière du substrat 1 de façon à former un blindage.

Avantageusement, un tracé réalisé par sérigraphie sur le substrat est réalisé de façon à matérialiser la matrice d'électrodes formant touches 5. Le dispositif formant écran tactile de l'invention peut être utilisé avec tout type d'écran connu jusqu'à maintenant. En particulier, ce dispositif peut être appliqué à un écran décrit dans le brevet US N° 4 293 734 dans le but de stabiliser la dérive dont souffre ce type d'écran.

On a décrit la formation des électrodes 2 et 5 à l'aide d'un circuit laser mais tout autre procédé peut être utilisé pour les former, par exemple en attaquant chimiquement la couche déposée correspondante. De plus, dans le second mode de réalisation, les deux substrats 1 et 1', au lieu d'être collés ensemble, peuvent être mécaniquement assemblés l'un sur l'autre par des moyens appropriés.

L'écran tactile de l'invention a été décrit comme susceptible d'être appliqué sur un écran de visualisation d'un équipement informatique en vue d'établir un dialogue avec un opérateur mais il est bien entendu qu'il peut également être utilisé pour d'autres applications telles que par exemple la commande d'équipements électroménagers.

## Revendications

1. Dispositif formant écran tactile du type capacitif destiné notamment à recouvrir un écran de visualisation par exemple d'un tube à rayons cathodiques, caractérisé en ce qu'il comprend un premier groupe d'électrodes (2) électriquement conductrices transparentes et isolées les unes des autres, non exposées à l'extérieur et devant être connectées à un circuit électronique de détection de variation de capacité et un second groupe d'électrodes libres (5) électriquement conductrices transparentes isolées les unes des autres pour former des touches frontales et séparé du premier groupe par un diélectrique, les électrodes (5) du second groupe étant superposées respectivement aux électrodes (2) du premier groupe en se faisant face de façon à former des paires de condensateurs, dont la capacité de chacun varie lorsqu'un corps formant référentiel de masse, tel qu'un doigt d'un opérateur, est apposé sur une touche frontale (5).

2. Dispositif selon la revendication 1, caractérisé en ce que les électrodes (2) du premier groupe sont réalisées sur la face arrière d'un substrat (1) en forme de plaque en un matériau diélectrique transparent, tel que du verre, et les électrodes formant touches (5) du second groupe sont réalisées sur la face avant du substrat (1).

3. Dispositif selon la revendication 1, caractérisé en ce que les électrodes (2) du premier groupe sont réalisées sur la face avant d'un premier substrat (1) en forme de plaque en un matériau diélectrique transparent, tel que du verre, et les électrodes formant touches (5) du second groupe sont réalisées sur la face avant d'un second substrat (1') en forme de plaque en un matériau diélectrique transparent fixé sur la face avant du premier substrat (1), par exemple par collage.

4. Dispositif selon l'une des revendications précédentes, caractérisé en ce que les premier et second groupes d'électrodes (2 ; 5) forment respectivement deux matrices à colonnes et rangées et en ce que les électrodes du premier groupe sont reliées par de très fines pistes conductrices (3) réalisées soit sur la face arrière du substrat (1) précité soit sur la face avant du premier substrat (1) précité, à des points de contact électriques (4) disposés en deux rangées le long respectivement des bords supérieur et inférieur du substrat (1).

5. Dispositif selon l'une des revendications précédentes, caractérisé en ce qu'une couche électriquement conductrice assurant une protection électrostatique est déposée sur la face avant soit du substrat (1) précité, soit du second substrat (1') précité en entourant de façon isolée la matrice d'électrodes libres (5) précitée, ladite couche (6) étant mise à la masse.

6. Dispositif selon l'une des revendications précédentes, caractérisé en ce que la distance séparant les électrodes formant touches (5) des électrodes (2) précitée est par exemple d'environ 3 mm.

7. Dispositif selon l'une des revendications précédentes, caractérisé en ce que les électrodes (2) et la couche conductrice (6) précitées sont réalisés en oxyde d'indium et d'étain.

8. Dispositif selon l'une des revendications précédentes, caractérisé en ce que les électrodes formant touches (5) sont réalisées en oxyde d'indium et d'étain ou en oxyde d'étain et d'antimoine.

9. Dispositif selon l'une des revendications précédentes, caractérisé en ce que le substrat (1) ou le substrat (1') précité comprend un tracé obtenu par exemple par sérigraphie définissant la matrice d'électrodes (5) précitée.

10. Dispositif selon l'une des revendications précédentes, caractérisé en ce que le circuit électronique précité comprend un certain nombre d'oscillateurs associés respectivement aux paires de condensateurs (2, 5) précités, la fréquence naturelle de chaque oscillateur étant modifiée à chaque modification de capacité du condensateur associé résultant de la position précitée du corps formant référentiel de masse.

FIG. 1

Fig.2

Fig.3

Fig. 4

Fig. 5

**Office européen des brevets**

# RAPPORT DE RECHERCHE EUROPEENNE

Numéro de la demande

EP 91 40 0447

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 205 418 (PRZYBYLEK) <br> * Figures 1-3; colonne 1, ligne 33 – colonne 2, ligne 8 * | 1,2,4,5 ,7,9 | G 06 K 11/16 |
| Y | | 10 | |
| | --- | | |
| D,Y | US-A-3 696 409 (BRAATEN) <br> * Figures 2,3; colonne 1, ligne 46 – colonne 2, ligne 1 * | 10 | |
| | ----- | | |

**DOMAINES TECHNIQUES RECHERCHES (Int. Cl.5)**

G 06 K 11

Le présent rapport a été établi pour toutes les revendications

| Lieu de la recherche | Date d'achèvement de la recherche | Examinateur |
|---|---|---|
| LA HAYE | 26-04-1991 | WEISS P. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)